# EUROPÄISCHE PATENTSCHRIFT

(11) **EP 3 456 167 B1**
(45) Veröffentlichungstag und Bekanntmachung des Hinweises auf die Patenterteilung: **15.09.2021**
(21) Anmeldenummer: 18184434.1
(22) Anmeldetag: 19.07.2018
(51) Int. Cl.: A01B 79/00, A01D 41/127

(54) **LANDWIRTSCHAFTLICHE ARBEITSMASCHINE**
AGRICULTURAL MACHINE
ENGIN AGRICOLE

(30) Priorität: 19.09.2017 DE 102017121654
(43) Veröffentlichungstag der Anmeldung: 20.03.2019
(73) Patentinhaber: CLAAS Tractor S.A.S., 78141 Vélizy-Villacoublay Cedex (FR)
(72) Erfinder: Silvestre Nunez, Sofia, 75013 Paris (FR); Noyer, Pierre, 81739 München (DE); Ehlert, Christian, 33719 Bielefeld (DE); Heydekorn, Jens, 33428 Harsewinkel (DE); Heitmann, Christoph, 48231 Warendorf (DE); Neuhauser, Markus, 88489 Wain (DE); Reßmeyer, Henning, 31141 Hildesheim (DE); Guillaume, Patrick, 92370 Chaville (FR); Wieckhorst, Jan Carsten, 33098 Paderborn (DE); Köhler, Mathieu, 33428 Harsewinkel (DE)
(74) Vertreter: CLAAS Gruppe

(56) Entgegenhaltungen:
- EP-A1- 2 220 926
- EP-A1- 2 728 523
- EP-A1- 3 180 974
- DE-A1-102014 216 593

## Beschreibung

Die Erfindung betrifft eine landwirtschaftliche Arbeitsmaschine nach dem Oberbegriff des Anspruchs 1.

Bei der in Rede stehenden landwirtschaftlichen Arbeitsmaschine kann es sich um jedwede landwirtschaftliche Arbeitsmaschine handeln, die der Abarbeitung eines landwirtschaftlichen Arbeitsauftrags dient und die mit mindestens einem Arbeitsaggregat zur Durchführung oder Unterstützung landwirtschaftlicher Arbeit ausgestattet ist. Dazu gehören Zugmaschinen, insbesondere Traktoren, sowie Erntemaschinen, insbesondere Feldhäcksler, Mähdrescher oder dergleichen. Vorliegend steht beispielhaft die als Traktor ausgestaltete landwirtschaftliche Arbeitsmaschine im Vordergrund. Unter Arbeitsaggregaten werden neben eingebauten Arbeitsaggregaten wie Schrägförderer, Dreschwerk, Häckseleinrichtung oder dergleichen auch Anbaugeräte wie Pflug, Grubber, Anhänger oder dergleichen verstanden.

Bei landwirtschaftlichen Arbeitsmaschinen ist es zum Zwecke der Optimierung von Arbeitsprozessen, insbesondere Ernteprozessen, bekannt, unterschiedliche Betriebsparameter zu erfassen und auszuwerten. Der Begriff "Betriebsparameter" ist vorliegend weit zu verstehen. Er umfasst alle für den Betrieb der landwirtschaftlichen Arbeitsmaschine und insbesondere für einen Arbeitsauftrag relevanten Parameter, insbesondere Maschinenparameter wie beispielsweise Leistung, Drehmoment oder Fahrgeschwindigkeit, Arbeitsparameter wie beispielsweise Flächenverbrauch, Flächenleistung, die ausgebrachte Materialmenge, Grad des Bodenverdichtungsrisikos, Ballenzahl pro Stunde, verwendete Arbeitsaggregate oder den durchgeführten landwirtschaftlichen Arbeitsauftrag und/oder Umgebungsparameter wie beispielsweise die Bodenbeschaffenheit oder das Wetter. Die Erfassung entsprechender Betriebsparameter erfolgt zumindest teilweise automatisiert mittels einer Erfassungseinrichtung eines Fahrerassistenzsystems der landwirtschaftlichen Arbeitsmaschine.

Aus dem Stand der Technik (DE 10 2009 009 817 A1) ist es bekannt, auf Basis erfasster und ausgewerteter Betriebsparameter automatisch verbesserte Einstellungen für einen effizienteren Betrieb der landwirtschaftlichen Arbeitsmaschine vorzunehmen. Eine daraus resultierende Veränderung der Betriebsparameter wird dann über eine Anzeigeeinrichtung der landwirtschaftlichen Arbeitsmaschine dem Bediener angezeigt. Die Überprüfung, ob die vorgenommenen Veränderungen zu einem befriedigenden Arbeitsergebnis führen, muss der Bediener anhand von angezeigten Momentanwerten oder Durchschnittswerten für die Betriebsparameter vornehmen. Eine Bewertung der Veränderungen ist für den Bediener anhand dieser Werte nur schwer möglich.

Weitere landwirtschaftliche Arbeitsmaschinen mit Fahrerassistenzsystemen sind aus den Druckschriften DE 10 2014 216593 A1, EP 2 728 523 A1, EP 3 180 974 A1 und EP 2 220 926 A1 bekannt.

Der Erfindung liegt das Problem zugrunde, eine landwirtschaftliche Arbeitsmaschine bereitzustellen, die dem Bediener eine einfachere Beurteilung des Arbeitsergebnisses der landwirtschaftlichen Arbeitsmaschine ermöglicht.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Bei der vorschlagsgemäßen landwirtschaftlichen Arbeitsmaschine handelt es sich insbesondere um einen Traktor. Grundsätzlich ist die vorschlagsgemäße Lösung auch auf jedwede andere landwirtschaftliche Arbeitsmaschine, beispielsweise einen Mähdrescher oder Feldhäcksler, anwendbar. Die landwirtschaftliche Arbeitsmaschine weist ein Fahrerassistenzsystem auf, womit hier und vorzugsweise ein System gemeint ist, das den Fahrer bzw. Bediener der landwirtschaftlichen Arbeitsmaschine bei der Bedienung derselben während der Durchführung des landwirtschaftlichen Arbeitsauftrags sowie beim Betrieb auf der Straße oder dem landwirtschaftlichen Betriebshof unterstützt. Die Unterstützung kann sich dabei auf das Fahren und/oder Lenken der landwirtschaftlichen Arbeitsmaschine beziehen, aber auch auf die Auswertung und/oder Visualisierung von Betriebsparametern und insbesondere auf die Steuerung und Regelung der landwirtschaftlichen Arbeitsmaschine oder einzelner Arbeitsaggregate in Abhängigkeit von Betriebsparametern.

Wesentlich bei der vorschlagsgemäßen landwirtschaftlichen Arbeitsmaschine ist, dass das Fahrerassistenzsystem zunächst eine Vielzahl von Betriebsparametern, das heißt entsprechende Momentan- und/oder Durchschnittswerte, erfasst und darauf basierend Leistungskennzahlen bildet. Die Leistungskennzahlen werden dabei entsprechend einem von mehreren unterschiedlichen Modi erzeugt, die im Weiteren noch erläutert werden. Die so erhaltenen Leistungskennzahlen werden dann in Abhängigkeit eines Auswahlparameters, der im Weiteren ebenfalls noch erläutert wird, ausgewertet und/oder visualisiert. Die Auswertung und insbesondere die Visualisierung der Leistungskennzahlen hat den Vorteil, dass für den Bediener Handlungsoptionen erkennbar sind, welche einen effizienteren Betrieb der landwirtschaftlichen Arbeitsmaschine ermöglichen. Der Bediener muss also zur Beurteilung des Arbeitsergebnisses nicht oder zumindest nicht allein auf Momentanwerte oder Durchschnittswerte von Betriebsparametern zurückgreifen, sondern hat mit den erzeugten Leistungskennzahlen einen höheren und spezifischeren Informationsgehalt zur Verfügung.

Anspruch 1 definiert Auswahlparameter, nach denen die Auswertung und/ oder Visualisierung der Leistungskennzahlen erfolgt. Die Auswahl des jeweils zugrundezulegenden Auswahlparameters erfolgt bevorzugt bedienerseitig, beispielsweise ebenfalls über einen Touchscreen oder eine Tastatur. Es ist aber auch denkbar, eine automatische Auswahl des jeweiligen Auswahlparameters, insbesondere abhängig vom jeweilig zugrundeliegenden Modus, vorzusehen.

Weiterhin ermöglicht das Fahrerassistenzsystem die Eingabe von zeitpunktabhängige Veränderungen kennzeichnenden Bedienereingaben. Dies bietet den Vorteil, dass dem Bediener die Wirkung der vorgenommenen Änderungen angezeigt werden kann und eine Motivation zur weiteren Optimierung der Arbeitsmaschine gegeben ist.

Anspruch 2 definiert verschiedene bevorzugte Varianten einer Anzeigeeinrichtung zur Visualisierung der Leistungskennzahlen.

Die Ansprüche 3 bis 7 beschreiben bevorzugte Betriebsparameter, insbesondere Maschinenparameter, Arbeitsparameter, Umgebungsparameter und weitere Betriebsparameter, die von dem Fahrerassistenzsystem erfasst und/oder der Erzeugung der Leistungskennzahlen zugrunde gelegt werden können. Einzelne oder alle Betriebsparameter können dabei automatisch erfasst werden, beispielsweise mittels einer jeweils zugeordneten Sensoreinrichtung, und/oder bedienerseitig eingegeben oder ausgewählt werden (Anspruch 8). Das Eingeben kann seitens des Bedieners beispielsweise über einen Touchscreen oder eine Tastatur erfolgen, der bzw. die bevorzugt Bestandteil des Fahrerassistenzsystems ist. Auf diese Weise hat der Bediener auch die Möglichkeit, Betriebsparameter aus einer Auswahl auszuwählen, beispielsweise mittels eines Touchscreens oder einer Tastatur.

Wie bereits angedeutet, erfolgt das Erzeugen der unterschiedlichen Leistungskennzahlen entsprechend unterschiedlicher Modi. Gemeint sind hier mit dem Betrieb der landwirtschaftlichen Arbeitsmaschine in Zusammenhang stehende Modi. Bei der bevorzugten Ausgestaltung gemäß Anspruch 9 kann die Bildung der Leistungskennzahlen beispielsweise in einem Modus feldabhängig, in einem anderen Modus maschinenabhängig und/oder in noch einem anderen Modus ereignisabhängig (arbeitsauftragsabhängig) erfolgen. Entsprechendes ist auch für die Erfassung der Betriebsparameter denkbar.

Nach der Ausgestaltung gemäß Anspruch 10 werden die jeweiligen Leistungskennzahlen mittels einer Recheneinrichtung des Fahrerassistenzsystems dadurch gebildet, dass mindestens einer der Betriebsparameter zu mindestens einem anderen der Betriebsparameter in Bezug gesetzt wird. Dadurch kann dem Fahrer ein erhöhter und spezifischer Informationsgehalt zur Verfügung gestellt werden.

Anspruch 11 definiert bevorzugte Möglichkeiten der Visualisierung der jeweiligen Leistungskennzahlen.

Nach der Ausgestaltung gemäß Anspruch 12 kann die Auswertung und/oder Visualisierung der Leistungskennzahlen während der Durchführung oder nach dem Abschluss eines landwirtschaftlichen Arbeitsauftrags erfolgen.

Bei der bevorzugten Ausgestaltung gemäß Anspruch 13 kann auch eine zeitpunktabhängige Änderung der jeweiligen Leistungskennzahl bei der Auswertung und/oder Visualisierung berücksichtigt werden, beispielsweise durch das Setzen und/oder Anzeigen von Markierungen.

Die Leistungskennzahlen können gemäß Anspruch 14 auch in einer Datenbank, insbesondere einer Datenbank der landwirtschaftlichen Arbeitsmaschine oder in einer externen Datenbank, abgelegt werden, wobei diese jeweils einem oder mehreren der Betriebs- und/oder Auswahlparameter zugeordnet sind. Insbesondere werden die Leistungskennzahlen einem bestimmten landwirtschaftlichen Arbeitsauftrag, einem bestimmten Arbeitsaggregat und/oder einer bestimmten GPS-Position zugeordnet. Auf diese Weise lassen sich die Leistungskennzahlen jederzeit von dem Bediener der landwirtschaftlichen Arbeitsmaschine oder von anderen Bedienern abrufen.

Im Folgenden wird die Erfindung anhand einer lediglich Ausführungsbeispiele darstellenden Zeichnung näher erläutert. In der Zeichnung zeigt
- Fig. 1: eine schematische Ansicht einer vorschlagsgemäßen landwirtschaftlichen Arbeitsmaschine mit einem eine Anzeige von Leistungskennzahlen ermöglichenden Fahrerassistenzsystem,
- Fig. 2: Beispiele für unterschiedliche, in Form eines Kuchendiagramms visualisierte Leistungskennzahlen,
- Fig. 3: Beispiele für unterschiedliche, in Form eines Balkendiagramms visualisierte Leistungskennzahlen und
- Fig. 4: Beispiele für unterschiedliche, in Form eines Kurvendiagramms visualisierte Leistungskennzahlen.

Die vorschlagsgemäße landwirtschaftliche Arbeitsmaschine 1 erlaubt mittels ihres Fahrerassistenzsystems 2 die Erfassung einer Vielzahl von Betriebsparametern und basierend auf den erfassten Betriebsparametern das Bilden unterschiedlicher Leistungskennzahlen, was entsprechend einem von mehreren unterschiedlichen mit dem Betrieb der landwirtschaftlichen Arbeitsmaschine 1 in Zusammenhang stehenden Modi geschieht. In Abhängigkeit eines bedienerseitig oder systemseitig ausgewählten Auswahlparameters erfolgt dann eine Auswertung und/oder Visualisierung der Leistungskennzahlen, wodurch für den Bediener Handlungsoptionen erkennbar sind, die einen effizienteren Betrieb der landwirtschaftlichen Arbeitsmaschine 1 ermöglichen. Da Leistungskennzahlen im Unterschied zu Momentanwerten oder Durchschnittswerten von Betriebsparametern einen höheren Informationsgehalt aufweisen können und insbesondere auch einem konkreten landwirtschaftlichen Arbeitsauftrag entsprechen können, wird dem Bediener eine einfachere Beurteilung der Arbeitsergebnisse der landwirtschaftlichen Arbeitsmaschine 1, insbesondere nach einem Optimierungsvorgang, ermöglicht.

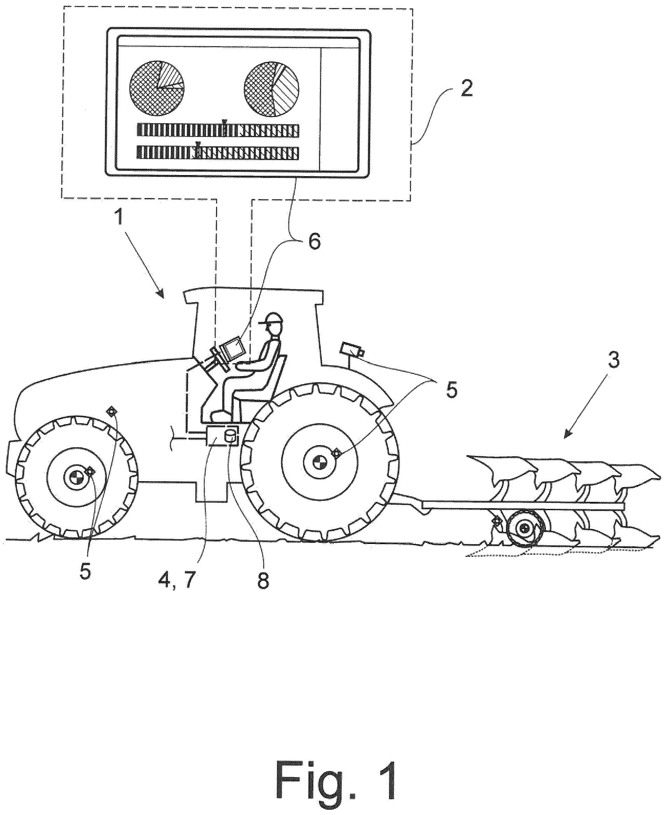

In Fig. 1 ist dargestellt, wie eine landwirtschaftliche Arbeitsmaschine 1, hier in Form eines Traktors, mittels eines Arbeitsaggregats 3, bei dem es sich hier beispielhaft um einen Pflug handelt, einen landwirtschaftlichen Arbeitsauftrag, hier eine Bodenbearbeitung, ausführt. Die landwirtschaftliche Arbeitsmaschine 1 weist ein Fahrerassistenzsystem 2 auf, das mittels einer Erfassungseinrichtung 4, die bevorzugt verschiedene Sensoreinrichtungen 5 aufweist, unterschiedliche Betriebsparameter erfassen kann. Die Sensoreinrichtungen 5 können, um nur einige Beispiele zu nennen, dazu dienen, das abgegebene Antriebsdrehmoment des Hauptantriebsmotors der landwirtschaftlichen Arbeitsmaschine 1, die Drehzahl an der Antriebswelle des Hauptantriebsmotors, den Reifenluftdruck, die Fahrgeschwindigkeit etc. zu erfassen. Neben einer automatischen Erfassung von Betriebsparametern mittels einer Sensoreinrichtung 5 ist es auch denkbar, Betriebsparameter durch Berechnung aus sensorisch erfassten Betriebsparametern, zum Beispiel die abgegebene Antriebsleistung aus Antriebsdrehmoment und Drehzahl, zu erhalten und/oder Betriebsparameter manuell einzugeben und/oder auszuwählen, wozu das Fahrerassistenzsystem 2 insbesondere eine Anzeigeeinrichtung 6 hier und vorzugsweise in Form eines Touchscreens aufweist.

Das Fahrerassistenzsystem 2 der landwirtschaftlichen Arbeitsmaschine 1 weist ferner eine Recheneinrichtung 7 auf, die eine Datenbank 8 enthält, in der die von der Recheneinrichtung 7 erzeugten Leistungskennzahlen so abgelegt sind, dass jede Leistungskennzahl einem oder mehreren der erfassten Betriebsparameter und/oder einem oder mehreren der auswählbaren Auswahlparameter zugeordnet ist. Der Vollständigkeit halber sei darauf hingewiesen, dass die Recheneinrichtung 7 und/oder die Datenbank 8 genauso wie die Anzeigeeinrichtung 6 nicht zwingend Bestandteil der landwirtschaftlichen Arbeitsmaschine 1 sein muss bzw. müssen, sondern alternativ oder zusätzlich auch außerhalb des Fahrerassistenzsystems 2 und/oder der landwirtschaftlichen Arbeitsmaschine 1, das heißt extern, vorgesehen sein kann bzw. können.

So kann beispielsweise die Visualisierung der Leistungskennzahlen auch auf einer separaten Anzeigeeinrichtung innerhalb einer Fahrerkabine der landwirtschaftlichen Arbeitsmaschine 1, auf einem mobilen Eingabe- und Anzeigegerät (smart device), auf einem externen Anzeigegerät eines Rechners des landwirtschaftlichen Betriebs oder eines Lohnunternehmers, auf einem externen Anzeigegerät einer anderen landwirtschaftlichen Arbeitsmaschine, auf einem externen Anzeigegerät eines Arbeitsaggregats 3 (zum Beispiel eines Kornwagens) und/oder auf einem externen Anzeigegerät einer landwirtschaftlichen Einrichtung (zum Beispiel einer Silokette) erfolgen. Die Recheneinrichtung 7 und/oder die Datenbank 8 kann ebenfalls extern angeordnet sein, beispielsweise auf einem mobilen Eingabe- und Anzeigegerät oder auf einem externen Rechner des landwirtschaftlichen Betriebs oder eines Lohnunternehmers.

Als Betriebsparameter, die über das Fahrerassistenzsystem 2 bzw. die Erfassungseinrichtung 4 automatisch oder manuell erfasst werden können, sind hier insbesondere Maschinenparameter, Arbeitsparameter und/oder Umgebungsparameter genannt.

Der jeweilige Maschinenparameter ist insbesondere gewählt aus der Gruppe umfassend die Fahrgeschwindigkeit, die abgegebene Antriebsleistung, das abgegebene Antriebsdrehmoment, die Drehzahl der Antriebswelle, den Kraftstoffverbrauch, den Luftdruck und/oder Reifentyp des vorderen und/oder hinteren Reifenpaars, das Gewicht einer vorderen und/oder hinteren Ballasteinrichtung und/oder Daten über den Ölkreislauf (zum Beispiel Öltemperatur und/oder Öldruck). Der jeweilige Arbeitsparameter ist insbesondere aus der Gruppe gewählt umfassend einen landwirtschaftlichen Arbeitsauftrag, ein Arbeitsaggregat, die Arbeitstiefe und/oder -breite des jeweiligen Arbeitsaggregats, den Flächenverbrauch, die Flächenleistung, die ausgebrachte Materialmenge, z.B. von Düngemittel oder dergleichen, den Grad des Bodenverdichtungsrisikos, die Ballenzahl pro Stunde und/oder den Grad der Kornverluste. Der jeweilige Umgebungsparameter ist insbesondere aus der Gruppe gewählt umfassend die Art des Geländes (zum Beispiel Feld, Straße, landwirtschaftlicher Betriebshof), die Größe des Feldes, die Bodenbeschaffenheit (zum Beispiel Bodenart, Bodenzustand, Bodenfeuchte), die Erntegutbeschaffenheit (zum Beispiel Erntegutart, Erntegutfeuchte), Wetterdaten und/oder GPS-Positionsdaten. Außerdem können noch weitere Betriebsparameter erfasst werden, beispielsweise Parameter aus der Gruppe umfassend die Uhrzeit, das Datum, die Person des Bedieners, die Betriebskosten der landwirtschaftlichen Arbeitsmaschine 1 und/oder den Arbeitslohn.

Die Erfassung der der Erzeugung der Leistungskennzahlen zugrundeliegenden Betriebsparameter und/oder die Erzeugung der Leistungskennzahlen erfolgt wie gesagt abhängig von einem von mehreren Modi jeweils auf unterschiedliche Weise, das heißt, es werden abhängig vom vorgesehenen Modus für diesen Modus spezifische Betriebsparameter erfasst und/oder Leistungskennzahlen gebildet. Beispielsweise erfolgt das Erfassen der Betriebsparameter und/oder das Erzeugen der Leistungskennzahlen in einem Modus feldabhängig, das heißt, je nach bearbeitetem Feld werden andere Betriebsparameter erfasst und/oder andere Leistungskennzahlen gebildet. In einem anderen Modus kann die Erfassung der Betriebsparameter und/oder Bildung der Leistungskennzahlen auch maschinenabhängig erfolgen, das heißt, je nach verwendeter landwirtschaftliche Arbeitsmaschine 1 und/oder je nach verwendetem Arbeitsaggregat 3 werden andere Betriebsparameter erfasst und/oder andere Leistungskennzahlen gebildet. In noch einem anderen Modus kann dies auch ereignisabhängig erfolgen, das heißt, je nach landwirtschaftlichem Arbeitsauftrag werden andere Betriebsparameter erfasst und/oder andere Leistungskennzahlen erzeugt.

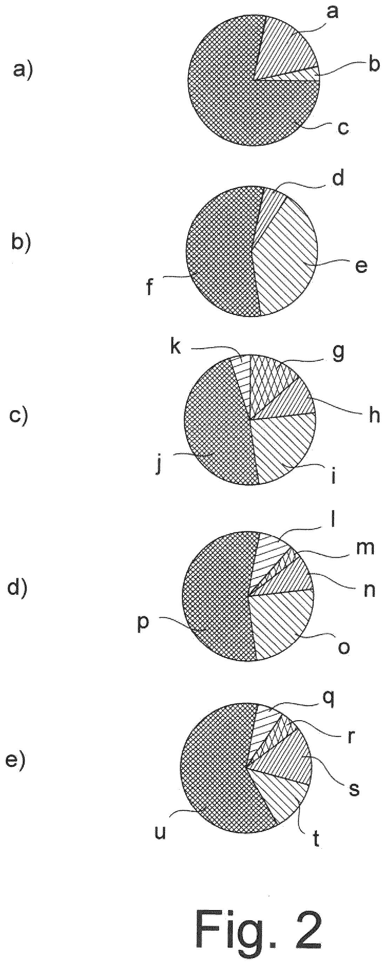

Bevorzugte Ausführungsbeispiele möglicher Visualisierungen von auf die vorangehend beschriebene Art erzeugten Leistungskennzahlen sind in den Figuren 2 bis 4 dargestellt. Die der Visualisierung vorangehende Erzeugung der jeweiligen Leistungskennzahlen erfolgt hier und vorzugsweise mittels der Recheneinrichtung 7, und zwar insbesondere dadurch, dass mindestens einer der Betriebsparameter zu mindestens einem anderen der Betriebsparameter in Bezug gesetzt wird. Beispielsweise stellen, abhängig von dem jeweiligen Modus, folgende Leistungskennzahlen bzw. Beziehungen zwischen erfassten Betriebsparametern eine sinnvolle Information für den Bediener dar:
- Kraftstoffverbrauch bezogen auf die Fahrgeschwindigkeit der landwirtschaftlichen Arbeitsmaschine 1,
- benötigte Zeit, insbesondere benötigte Zeit für die Durchführung eines landwirtschaftlichen Arbeitsauftrags, hier des Pflügens, bezogen auf die Fahrgeschwindigkeit der landwirtschaftlichen Arbeitsmaschine 1,
- Kraftstoffverbrauch pro Flächeneinheit bezogen auf die Fahrgeschwindigkeit der landwirtschaftlichen Arbeitsmaschine 1,
- Kraftstoffverbrauch pro Flächeneinheit bezogen auf die benötigte Zeit, insbesondere die benötigte Zeit zur Durchführung eines landwirtschaftlichen Arbeitsauftrags,
- Kraftstoffverbrauch pro Flächeneinheit bezogen auf die jeweilige Person des Bedieners,
- bearbeitete Fläche pro Zeiteinheit bezogen auf die Fahrgeschwindigkeit der landwirtschaftlichen Arbeitsmaschine 1,
- Kosten pro Zeiteinheit bezogen auf die Fahrgeschwindigkeit der landwirtschaftlichen Arbeitsmaschine 1,
- Kornverluste in Bezug auf eine Zeiteinheit
- Ballendurchsatz in Bezug auf eine Zeiteinheit.

Beispiele für eine Visualisierung von Leistungskennzahlen in Form eines Kuchendiagramms sind in den Figuren 2a bis e dargestellt.

In Figur 2a sind beispielsweise die mit der landwirtschaftlichen Arbeitsmaschine 1 während eines landwirtschaftlichen Arbeitsauftrags, beispielsweise während des Pflügens, ausgeführten Tätigkeiten (a: Vorgewendebetrieb, b: Leerlaufbetrieb, c: Feldarbeit, insbesondere Bodenbearbeitung) in Bezug auf die dafür jeweils benötigte Zeit visualisiert. In Figur 2b sind die wesentlichen Kostenverursacher (d: Verschleiß, e: Wartung, f: Kraftstoff) in Bezug auf deren Kostenanteil visualisiert. In Figur 2c ist der Kraftstoffverbrauch pro bearbeitete Fläche in Bezug auf unterschiedliche landwirtschaftliche Arbeitsaufträge (g: Düngen, h: Kartoffelernte, i: Säen, j: Bodenbearbeitung, k: andere Arbeitsaufträge) visualisiert. In Figur 2d ist der Kraftstoffverbrauch für eine bestimmte landwirtschaftliche Arbeitsmaschine 1, hier für einen bestimmten Traktor, in Bezug auf mit der landwirtschaftlichen Arbeitsmaschine 1 ausgeführte Tätigkeiten (I: Vorgewendebetrieb, m: Leerlaufbetrieb im Feld, n: Leerlaufbetrieb auf dem landwirtschaftlichen Betriebshof, o: Straßenbetrieb, p: Feldarbeit) visualisiert. In Figur 2e ist der Kraftstoffverbrauch für eine bestimmte landwirtschaftliche Arbeitsmaschine 1, hier für einen bestimmten Traktor, mit einem bestimmten Arbeitsaggregat 3 in Bezug auf mit der landwirtschaftlichen Arbeitsmaschine 1 ausgeführte Tätigkeiten (q: Vorgewendebetrieb, r: Leerlaufbetrieb im Feld, s: Leerlaufbetrieb auf dem landwirtschaftlichen Betriebshof, t: Straßenbetrieb, u: Feldarbeit) visualisiert.

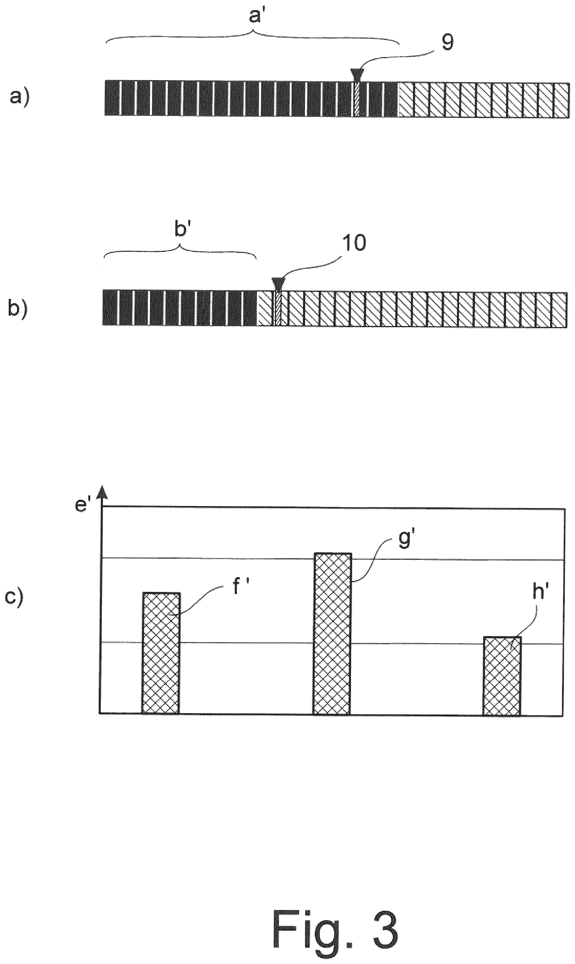

In den Figuren 3a bis c sind Beispiele von Balkendiagrammen zur Visualisierung von Leistungskennzahlen dargestellt.

In Figur 3a sind beispielsweise die verursachten Kosten a', insbesondere die Betriebskosten der landwirtschaftlichen Arbeitsmaschine 1 und/oder der Arbeitslohn des Bedieners, in Bezug auf eine Flächeneinheit, beispielsweise in Bezug auf einen Hektar, für eine bestimmte landwirtschaftliche Arbeitsmaschine 1 mit einem bestimmten Arbeitsaggregat 3, hier für einen bestimmten Traktor mit einem Pflug, visualisiert. Bei der Darstellung der Kosten a' handelt es sich hier um einen Momentanwert. Die Markierung 9, die hier und vorzugsweise systemseitig gesetzt ist, gibt die durchschnittlichen Kosten für die genannte Kombination aus landwirtschaftlicher Arbeitsmaschine 1 und Arbeitsaggregat 3 an. Man erkennt, dass der Momentanwert hier über den Durchschnittskosten liegt. In Figur 3b ist die bearbeitete Fläche b' in Bezug auf eine Zeiteinheit, beispielsweise in Bezug auf eine Stunde, hier ebenfalls als Momentanwert, dargestellt. Auch hier ist, vorzugsweise systemseitig, eine Markierung 10 gesetzt, die die durchschnittlich bearbeitete Fläche pro Zeiteinheit mit der genannten Kombination aus landwirtschaftlicher Arbeitsmaschine 1 und Arbeitsaggregat 3 zeigt. Hier ist zu erkennen, dass der Momentanwert für die bearbeitete Fläche b' unter dem Durchschnittswert liegt. In Figur 3c ist der Kraftstoffverbrauch pro Flächeneinheit e' bei einem bestimmten landwirtschaftlichen Arbeitsauftrag, hier beim Pflügen, in Bezug auf die Person des Bedieners (f: erster Bediener, g': zweiter Bediener, h': dritter Bediener) visualisiert.

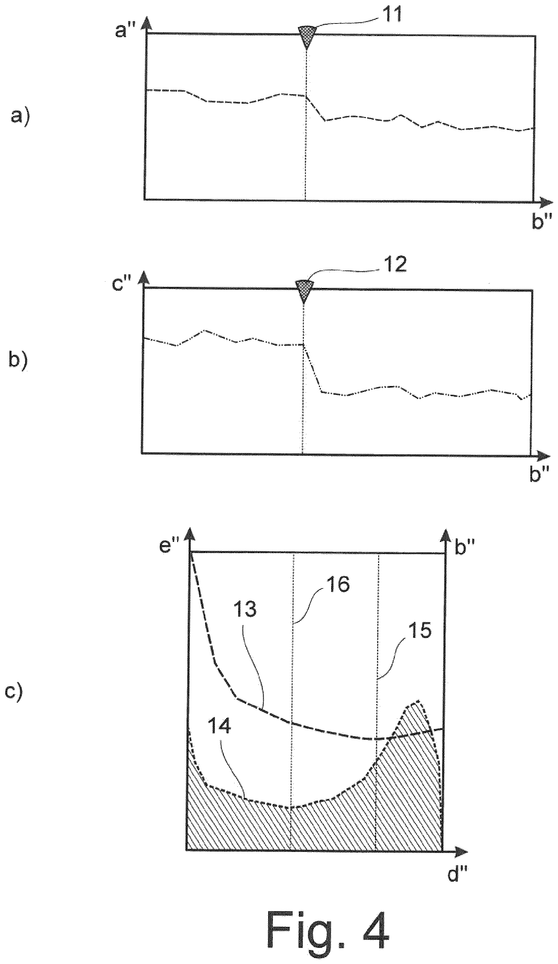

In den Figuren 4a bis c sind Beispiele für eine Visualisierung von Leistungskennzahlen mittels Kurvendiagrammen dargestellt.

In Figur 4a ist der Kraftstoffverbrauch pro Flächeneinheit a" in Bezug auf die Zeit b" dargestellt, wobei hier bedienerseitig eine Markierung 11 gesetzt worden ist, die den Beginn eines insbesondere automatisierten Verbrauchsoptimierungsprozesses anzeigt. In Figur 4b ist der Grad der Kornverluste c" in Bezug auf die Zeit d" visualisiert, wobei auch hier eine bedienerseitig gesetzte Markierung 12 den Beginn eines insbesondere automatisierten Optimierungsprozesses zur Reduzierung von Kornverlusten anzeigt. Die Figuren 4a und b lassen auch erkennen, dass bei der Auswertung und/oder Visualisierung der jeweiligen Leistungskennzahlen eine zeitpunktabhängige Veränderung, hier eine durch den jeweiligen Optimierungsvorgang erzeugte Veränderung, ebenfalls berücksichtigt werden kann. Dem Bediener wird dazu insbesondere ermöglicht, die zeitpunktabhängige Veränderung kennzeichnende Bedienereingaben vorzunehmen, beispielsweise das Setzen von Markierungen 11, 12. In Figur 4c sind zwei Kurven 13 und 14 übereinandergelegt, wobei die Kurve 13 die benötigte Zeit b" in Bezug auf die Fahrgeschwindigkeit d" bei der Durchführung eines bestimmten landwirtschaftlichen Arbeitsauftrags, hier beim Pflügen, repräsentiert und die Kurve 14 den Kraftstoffverbrauch pro Flächeneinheit e" in Bezug auf die Fahrgeschwindigkeit d" bei demselben landwirtschaftlichen Arbeitsauftrag repräsentiert. Eine hier systemseitig gesetzte Markierung 15 zeigt die Fahrgeschwindigkeit an, mit der der landwirtschaftliche Arbeitsauftrag am schnellsten ausgeführt werden kann. Hieran kann auch der der Fahrgeschwindigkeit zugeordnete Kraftstoffverbrauch abgelesen werden. Eine weitere Markierung 16 kann optional anzeigen, bei welcher Fahrgeschwindigkeit der Kraftstoffverbrauch minimiert wäre, wobei daran die zusätzlich zu investierende Zeit abgelesen werden kann. Der Bediener erhält hier beispielsweise die Information, dass er gegenüber dem zeitlichen Optimum (Markierung 15) 25 Liter an Kraftstoff einsparen würde, wenn er 30 Minuten mehr für eine zu bearbeitende Fläche von 9 Hektar beim Pflügen investieren würde.

Die vorangehend beispielhaft erläuterten Visualisierungen der Leistungskennzahlen erfolgen in Abhängigkeit eines Auswahlparameters, der insbesondere gewählt ist aus der Gruppe umfassend eine oder mehrere bestimmte landwirtschaftliche Arbeitsmaschinen 1, einen bestimmten Arbeitsauftrag, ein bestimmtes Arbeitsaggregat 3, ein bestimmtes Feld, eine oder mehrere bestimmte Umgebungsbedingungen, einen oder mehrere bestimmte Bediener, eine bestimmte Zeit, ein bestimmtes Datum und/oder eine Kombination von mindestens zwei dieser Auswahlparameter. Der jeweilige zugrundezulegende Auswahlparameter wird dabei beispielsweise von dem Bediener festgelegt und insbesondere aus einer Auswahl von Auswahlparametern ausgewählt. Es ist aber auch denkbar, dass die Auswahl des Auswahlparameters systemseitig erfolgt, insbesondere je nach Betriebssituation (Feldbearbeitung, Straßenfahrt, Aufenthalt auf dem landwirtschaftlichen Betriebshof).

Die vorangehend beschriebene Auswertung und/oder Visualisierung der jeweiligen Leistungskennzahl(en) kann während der Durchführung eines landwirtschaftlichen Arbeitsauftrags oder nach dem Abschluss eines solchen landwirtschaftlichen Arbeitsauftrags erfolgen.

### Bezugszeichenliste

- 1: Landwirtschaftliche Arbeitsmaschine
- 2: Fahrerassistenzsystem
- 3: Arbeitsaggregat
- 4: Erfassungseinrichtung
- 5: Sensoreinrichtung
- 6: Anzeigeeinrichtung
- 7: Recheneinrichtung
- 8: Datenbank
- 9-12: Markierungen
- 13, 14: Kurven
- 15, 16: Markierungen
- a-u: Leistungskennzahlen
- a'-h': Leistungskennzahlen
- a"-e": Leistungskennzahlen

## Patentansprüche

1. Landwirtschaftliche Arbeitsmaschine (1), insbesondere Traktor, mit mindestens einem Arbeitsaggregat (3) zur Durchführung oder Unterstützung landwirtschaftlicher Arbeit und mit einem Fahrerassistenzsystem (2) zum Erfassen von Betriebsparametern,
**dadurch gekennzeichnet,**
**dass** das Fahrerassistenzsystem (2) konfiguriert ist, eine Vielzahl von Betriebsparametern zu erfassen und basierend auf den erfassten Betriebsparametern Leistungskennzahlen zu bilden, wobei die Leistungskennzahlen in Abhängigkeit von einem von mehreren unterschiedlichen Modi gebildet werden und jeder Modi einen mit dem Betrieb der landwirtschaftlichen Arbeitsmaschine (1) in Zusammenhang stehenden feld- und/oder maschine- und/oder ereignisabhängigen Modus umfasst,
- wobei das Erfassen der Betriebsparameter und das Erzeugen der Leistungskennzahlen in dem Modus feldabhängig heißt, dass je nach bearbeitetem Feld andere Betriebsparameter erfasst und andere Leistungskennzahlen gebildet werden,
- wobei die Erfassung der Betriebsparameter und Bildung der Leistungskennzahlen in dem Modus maschinenabhängig heißt, dass je nach verwendeter landwirtschaftliche Arbeitsmaschine (1) und/oder je nach verwendetem Arbeitsaggregat (3) andere Betriebsparameter erfasst und andere Leistungskennzahlen gebildet werden,
- wobei die Erfassung der Betriebsparameter und Bildung der Leistungskennzahlen in dem Modus ereignisabhängig heißt, dass je nach landwirtschaftlichem Arbeitsauftrag andere Betriebsparameter erfasst und andere Leistungskennzahlen erzeugt werden,
wobei eine Auswertung und/oder Visualisierung der Leistungskennzahlen in Abhängigkeit eines Auswahlparameters erfolgt und der jeweilige Auswahlparameter gewählt ist aus der Gruppe umfassend eine landwirtschaftliche Arbeitsmaschine (1), einen Arbeitsauftrag, ein Arbeitsaggregat (3), ein Feld, eine oder mehrere Umgebungsbedingungen, mindestens einen Bediener, eine Zeit, ein Datum und/oder eine Kombination von mindestens zwei dieser Auswahlparameter, und dass das Fahrerassistenzsystem (2) konfiguriert ist, bei der Auswertung und/oder Visualisierung der jeweiligen Leistungskennzahlen zeitpunktabhängige Veränderungen kennzeichnende Bedienereingaben zu ermöglichen.

2. Landwirtschaftliche Arbeitsmaschine nach Anspruch 1, **dadurch gekennzeichnet, dass** die Visualisierung auf einer Anzeigeeinrichtung (6) des Fahrerassistenzsystems (2), auf einer separaten Anzeigeeinrichtung innerhalb einer Fahrerkabine der landwirtschaftlichen Arbeitsmaschine (1), auf einem mobilen Eingabe- und Anzeigegerät, auf einem externen Anzeigegerät eines Rechners eines landwirtschaftlichen Betriebs oder eines Lohnunternehmers, auf einem externen Anzeigegerät einer anderen landwirtschaftlichen Arbeitsmaschine, auf einem externen Anzeigegerät eines Arbeitsaggregats (3) der landwirtschaftlichen Arbeitsmaschine (1) und/oder auf einem externen Anzeigegerät einer landwirtschaftlichen Einrichtung erfolgt.

3. Landwirtschaftliche Arbeitsmaschine nach Anspruch 1 oder 2, **dadurch gekennzeichnet, dass** als Betriebsparameter ein oder mehrere Maschinenparameter, Arbeitsparameter und/oder Umgebungsparameter erfasst werden.

4. Landwirtschaftliche Arbeitsmaschine nach einem der vorhergehenden Ansprüche, **dadurch gekennzeichnet, dass** der jeweilige Maschinenparameter gewählt ist aus der Gruppe umfassend die Fahrgeschwindigkeit, die abgegebene Antriebsleistung, das abgegebene Antriebsdrehmoment, die Drehzahl der Antriebswelle, den Kraftstoffverbrauch, den Luftdruck und/oder Reifentyp des vorderen und/oder hinteren Reifenpaars, das Gewicht einer vorderen und/oder hinteren Ballasteinrichtung und/oder Daten über den Ölkreislauf.

5. Landwirtschaftliche Arbeitsmaschine nach einem der vorhergehenden Ansprüche, **dadurch gekennzeichnet, dass** der jeweilige Arbeitsparameter gewählt ist aus der Gruppe umfassend einen landwirtschaftlichen Arbeitsauftrag, ein Arbeitsaggregat (3), die Arbeitstiefe und/oder -breite des jeweiligen Arbeitsaggregats (3), den Flächenverbrauch, die Flächenleistung, die ausgebrachte Materialmenge, den Grad des Bodenverdichtungsrisikos, die Ballenzahl pro Stunde und/oder den Grad der Kornverluste.

6. Landwirtschaftliche Arbeitsmaschine nach einem der vorhergehenden Ansprüche, **dadurch gekennzeichnet, dass** der jeweilige Umgebungsparameter gewählt ist aus der Gruppe umfassend die Art des Geländes, die Größe des Feldes, die Bodenbeschaffenheit, die Erntegutbeschaffenheit, Wetterdaten und/oder GPS-Positionsdaten.

7. Landwirtschaftliche Arbeitsmaschine nach einem der vorhergehenden Ansprüche, **dadurch gekennzeichnet, dass** als weitere Betriebsparameter Parameter aus der Gruppe erfasst werden, umfassend die Uhrzeit, das Datum, die Person des Bedieners, die Betriebskosten der landwirtschaftlichen Arbeitsmaschine (1) und/oder den Arbeitslohn des Bedieners.

8. Landwirtschaftliche Arbeitsmaschine nach einem der vorhergehenden Ansprüche, **dadurch gekennzeichnet, dass** einzelne oder alle Betriebsparameter automatisch erfasst oder durch eine bedienerseitige Eingabe oder Auswahl erfasst werden.

9. Landwirtschaftliche Arbeitsmaschine nach einem der vorhergehenden Ansprüche, **dadurch gekennzeichnet, dass** die Erfassung der Betriebsparameter und/oder die Bildung der Leistungskennzahlen in einem Modus feldabhängig, in einem anderen Modus maschinenabhängig und/oder in noch einem anderen Modus ereignisabhängig erfolgt.

10. Landwirtschaftliche Arbeitsmaschine nach einem der vorhergehenden Ansprüche, **dadurch gekennzeichnet, dass** das Fahrerassistenzsystem (2) eine Recheneinrichtung (7) aufweist, die die jeweilige Leistungskennzahl dadurch bildet, dass mindestens einer der Betriebsparameter zu mindestens einem anderen der Betriebsparameter in Bezug gesetzt wird.

11. Landwirtschaftliche Arbeitsmaschine nach einem der vorhergehenden Ansprüche, **dadurch gekennzeichnet, dass** die Anzeigeeinrichtung (6) die Visualisierung der jeweiligen Leistungskennzahl(en) als Kuchendiagramm, Balkendiagramm und/oder Kurvendiagramm ermöglicht.

12. Landwirtschaftliche Arbeitsmaschine nach einem der vorhergehenden Ansprüche, **dadurch gekennzeichnet, dass** die Auswertung und/oder Visualisierung der jeweiligen Leistungskennzahl(en) während der Durchführung eines landwirtschaftlichen Arbeitsauftrags oder nach dem Abschluss eines landwirtschaftlichen Arbeitsauftrags erfolgt.

13. Landwirtschaftliche Arbeitsmaschine nach einem der vorhergehenden Ansprüche, **dadurch gekennzeichnet, dass** das Fahrerassistenzsystem (2) konfiguriert ist, bei der Auswertung und/oder Visualisierung der jeweiligen Leistungskennzahl(en) eine zeitpunktabhängige Veränderung der jeweiligen Leistungskennzahl(en) zu berücksichtigen.

14. Landwirtschaftliche Arbeitsmaschine nach einem der vorhergehenden Ansprüche, **dadurch gekennzeichnet, dass** das Fahrerassistenzsystem (2) konfiguriert ist, eine oder mehrere Leistungskennzahl(en) in einer Datenbank (8) einem oder mehreren der Betriebs- und/oder Auswahlparameter zugeordnet abzulegen.

## Claims

1. An agricultural working machine (1), in particular a tractor, with at least one working assembly (3) for carrying out or supporting agricultural work and with a driver assistance system (2) for detecting operational parameters,
**characterized in that**
the driver assistance system (2) is configured to detect a plurality of operational parameters and to form performance indicators based on the detected operational parameters, wherein the performance indicators are formed as a function of one of a plurality of different modes and each mode comprises a field-dependent and/or machine-dependent and/or event-dependent mode which is linked to the operation of the agricultural working machine (1),
- wherein the detection of the operational parameters and the production of the performance indicators in the field-dependent mode means that other operational parameters are detected and other performance indicators are formed as a function of the field being worked,
- wherein the detection of the operational parameters and formation of the performance indicators in the machine-dependent mode means that other operational parameters are detected and other performance indicators are formed as a function of the agricultural working machine (1) employed and/or as a function of the working assembly (3) employed,
- wherein the detection of the operational parameters and the formation of the performance indicators in the event-dependent mode means that other operational parameters are detected and other performance indicators are produced as a function of the agricultural operational assignment,
wherein an evaluation and/or visualisation of the performance indicators is carried out as a function of a selection parameter and the respective selection parameter is selected from the group comprising an agricultural working machine (1), an operational assignment, a working assembly (3), a field, one or more environmental conditions, at least one operator, a time, a date and/or a combination of at least two of these selection parameters, and **in that** the driver assistance system (2) is configured to enable time-dependent variations of characteristic operator inputs during evaluation and/or visualisation of the respective performance indicators.

2. The agricultural working machine according to claim 1, **characterized in that** the visualisation is made on a display device (6) of the driver assistance system (2), on a separate display device inside a driver's cab of the agricultural working machine (1), on a mobile input and display device, on an external display device of a computer of an agricultural enterprise or a contractor, on an external display device of another agricultural working machine, on an external display device of a working assembly (3) of the agricultural working machine (1) and/or on an external display device of agricultural equipment.

3. The agricultural working machine according to claim 1 or claim 2, **characterized in that** one or more machine parameters, working parameters and/or environmental parameters are detected as the operational parameter.

4. The agricultural working machine according to one of the preceding claims, **characterized in that** the respective machine parameter is selected from the group comprising the speed of travel, the output power, the output drive torque, the speed of the drive shaft, the fuel consumption, the air pressure and/or tyre type of the front and/or rear tyre pair, the weight of a front and/or rear ballasting means and/or data regarding the oil circulation system.

5. The agricultural working machine according to one of the preceding claims, **characterized in that** the respective working parameter is selected from the group comprising an agricultural operational assignment, a working assembly (3), the working depth and/or width of the respective working assembly (3), the land usage, the land output, the quantity of material deployed, the soil compaction risk level, the number of bales per hour and/or the grain loss level.

6. The agricultural working machine according to one of the preceding claims, **characterized in that** the respective environmental parameter is selected from the group comprising the type of terrain, the size of the field, the composition of the ground, the composition of the harvested material, weather data and/or GPS positioning data.

7. The agricultural working machine according to one of the preceding claims, **characterized in that** parameters from the group comprising the time of day, the date, the operator's identity, the operational costs for the agricultural working machine (1) and/or the wages of the operator are detected as further parameters.

8. The agricultural working machine according to one of the preceding claims, **characterized in that** individual or all of the operational parameters are detected automatically or by input or selection by the operator.

9. The agricultural working machine according to one of the preceding claims, **characterized in that** the detection of the operational parameters and/or the formation of the performance indicators is carried out field-dependently in one mode, machine-dependently in another mode and/or event-dependently in yet another mode.

10. The agricultural working machine according to one of the preceding claims, **characterized in that** the driver assistance system (2) has a computing unit (7) which forms the respective performance indicator by relating at least one of the operational parameters to at least one other operational parameter.

11. The agricultural working machine according to one of the preceding claims, **characterized in that** the display device (6) enables the visualisation of the respective performance indicator(s) as a pie chart, a bar chart and/or a graph.

12. The agricultural working machine according to one of the preceding claims, **characterized in that** the evaluation and/or visualisation of the respective performance indicator(s) is made while carrying out an agricultural operational assignment or after completion of an agricultural operational assignment.

13. The agricultural working machine according to one of the preceding claims, **characterized in that** the driver assistance system (2) is configured to take into consideration a time-dependent variation in the respective performance indicator(s) during the evaluation and/or visualisation of the respective performance indicator(s).

14. The agricultural working machine according to one of the preceding claims, **characterized in that** the driver assistance system (2) is configured to store one or more performance indicator(s) associated with one or more of the operational parameters and/or selection parameters in a database (8).

## Revendications

1. Machine de travail agricole (1), en particulier tracteur, comprenant au moins un organe de travail (3) pour réaliser ou assister un travail agricole et comprenant un système d'assistance à la conduite (2) pour détecter des paramètres d'exploitation, **caractérisée en ce que** le système d'assistance à la conduite (2) est configuré pour détecter une pluralité de paramètres d'exploitation et, sur la base des paramètres d'exploitation détectés, de former des indicateurs de puissance, les indicateurs de puissance étant formés en fonction d'un de plusieurs modes différents et chaque mode incluant un mode dépendant du champ et/ou de la machine et/ou de l'événement en relation avec le fonctionnement de la machine de travail agricole (1),
- la détection des paramètres d'exploitation et la génération d'indicateurs de puissance dans le mode dépendant du champ signifiant qu'après avoir travaillé le champ respectif, d'autres paramètres d'exploitation et d'autres indicateurs de puissance sont détectés,
- la détection des paramètres d'exploitation et la formation des indicateurs de puissance dans le mode dépendant de la machine signifiant qu'après avoir utilisé la machine de travail agricole respective (1) et/ou après avoir utilisé l'organe de travail respectif (3), d'autres paramètres d'exploitation et d'autres indicateurs de puissance sont détectés,
- la détection des paramètres d'exploitation et la formation des indicateurs de puissance dans le mode dépendant de l'événement signifiant qu'à l'issue de la tâche agricole, d'autres paramètres d'exploitation sont détectés et d'autres indicateurs de puissance sont générés,
une analyse et/ou une visualisation des indicateurs de puissance s'effectuant en fonction d'un paramètre de sélection et le paramètre de sélection respectif étant sélectionné parmi le groupe incluant une machine de travail agricole (1), une tâche, un organe de travail (3), un champ, une ou plusieurs conditions environnantes, au moins un utilisateur, un temps, une date et/ou une combinaison d'au moins deux de ces paramètres de sélection, et **en ce que** le système d'assistance à la conduite (2) est configuré pour permettre des modifications, dépendant du moment, d'entrées utilisateur caractéristiques.

2. Machine de travail agricole selon la revendication 1, **caractérisée en ce que** la visualisation s'effectue sur un équipement d'affichage (6) du système d'assistance à la conduite (2), sur un équipement d'affichage séparé à l'intérieur d'une cabine de conduite de la machine de travail agricole (1), sur un appareil mobile d'entrée et d'affichage, sur un appareil d'affichage externe d'un ordinateur d'une exploitation agricole ou d'un entrepreneur, sur un appareil d'affichage externe d'une autre machine de travail agricole, sur un appareil d'affichage externe d'un organe de travail (3) de la machine de travail agricole (1) et/ou sur un appareil d'affichage externe d'un équipement agricole.

3. Machine de travail agricole selon la revendication 1 ou 2, **caractérisée en ce qu'**un ou plusieurs paramètres machine, paramètres travail et/ou paramètres environnement sont détectés à titre de paramètres d'exploitation.

4. Machine de travail agricole selon une des revendications précédentes, **caractérisée en ce que** le paramètre machine respectif est sélectionné parmi le groupe incluant la vitesse de marche, la puissance d'entraînement débitée, le couple d'entraînement délivré, la vitesse de rotation de l'arbre d'entraînement, la consommation de carburant, la pression d'air et/ou le type de pneumatique de la paire de pneumatiques avant et/ou arrière, le poids d'un équipement de lestage avant et/ou arrière et/ou des données sur le circuit d'huile.

5. Machine de travail agricole selon une des revendications précédentes, **caractérisée en ce que** le paramètre travail respectif est sélectionné parmi le groupe incluant une tâche agricole, un organe de travail (3), la profondeur et/ou la largeur de travail de l'organe de travail respectif (3), l'utilisation de la surface, le rendement de surface, la quantité de matière fournie, le degré de risque de compaction du sol, le nombre de balles par heure et/ou le degré des pertes de grain.

6. Machine de travail agricole selon une des revendications précédentes, **caractérisée en ce que** le paramètre environnement respectif est sélectionné parmi le groupe incluant le type de terrain, la superficie du champ, la nature du sol, la nature du produit récolté, des données météorologiques et/ou des données de position GPS.

7. Machine de travail agricole selon une des revendications précédentes, **caractérisée en ce qu'**à titre d'autres paramètres d'exploitation sont détectés des paramètres parmi le groupe comprenant l'heure, la date, l'identité de l'utilisateur, les coûts d'exploitation de la machine de travail agricole (1) et/ou la rémunération de l'utilisateur.

8. Machine de travail agricole selon une des revendications précédentes, **caractérisée en ce que** certains ou tous les paramètres d'exploitation sont détectés automatiquement ou détectés par l'intermédiaire d'une entrée ou d'une sélection côté utilisateur.

9. Machine de travail agricole selon une des revendications précédentes, **caractérisée en ce que** la détection des paramètres d'exploitation et/ou la formation des indicateurs de puissance s'effectuent dans un mode dépendant du champ, dans un autre mode dépendant de la machine et/ou dans un encore autre mode dépendant de l'événement.

10. Machine de travail agricole selon une des revendications précédentes, **caractérisée en ce que** le système d'assistance à la conduite (2) comporte un équipement de calcul (7) qui forme l'indicateur de puissance respectif par le fait qu'au moins un des paramètres d'exploitation est mis en relation avec au moins un autre des paramètres d'exploitation.

11. Machine de travail agricole selon une des revendications précédentes, **caractérisée en ce que** l'équipement d'affichage (6) permet la visualisation du (des) indicateur(s) de puissance respectif(s) sous forme de camembert, d'histogramme et/ou de courbes.

12. Machine de travail agricole selon une des revendications précédentes, **caractérisée en ce que** l'analyse et/ou la visualisation du (des) indicateur(s) de puissance respectif(s) s'effectue pendant la réalisation d'une tâche agricole ou à l'issue d'une tâche agricole.

13. Machine de travail agricole selon une des revendications précédentes, **caractérisée en ce que** le système d'assistance à la conduite (2) est configuré pour tenir compte d'une modification, dépendant du moment, du (des) indicateur(s) de puissance respectif(s) lors de l'analyse et/ou de la visualisation du (des) indicateur(s) de puissance respectif (s) .

14. Machine de travail agricole selon une des revendications précédentes, **caractérisée en ce que** le système d'assistance à la conduite (2) est configuré pour enregistrer un ou plusieurs indicateurs de puissance dans une banque de données (8) en les associant à un ou plusieurs des paramètres d'exploitation et/ou de sélection.
